# EUROPÄISCHE PATENTSCHRIFT

(11) **EP 2 498 008 B1**
(45) Veröffentlichungstag und Bekanntmachung des Hinweises auf die Patenterteilung: **18.01.2023**
(21) Anmeldenummer: 12157647.4
(22) Anmeldetag: 01.03.2012
(51) Int. Cl.: F24D 3/10, F24D 3/12, F24D 19/00

(54) **Gebäude**
Building
Bâtiment

(30) Priorität: 10.03.2011 DE 102011005365
(43) Veröffentlichungstag der Anmeldung: 12.09.2012
(73) Patentinhaber: Hertneck, Sissy, 70771 Leinfelden-Echterdingen (DE)
(72) Erfinder: HERTNECK, Michael, VERSTORBEN (DE); SCHUCK, Ralf, 70597 Stuttgart (DE)
(74) Vertreter: BRP Renaud & Partner mbB Rechtsanwälte Patentanwälte Steuerberater

(56) Entgegenhaltungen:
- EP-A2- 0 092 032
- EP-A2- 1 039 249
- EP-A2- 1 065 447
- EP-A2- 1 826 503
- DE-A1- 19 633 930
- DE-U1- 9 316 361
- DE-U1- 20 019 953
- DE-U1- 29 611 577
- DE-U1- 29 704 807
- US-A- 5 381 902

## Beschreibung

Die vorliegende Erfindung betrifft ein mit einer Flächenheizeinrichtung ausgestattetes Gebäude gemäß dem Oberbegriff des Anspruchs 1.

Flächenheizeinrichtungen zeichnen sich durch eine großflächige Wärmeabstrahlung bei vergleichsweise niedriger Temperatur aus. Üblicherweise sind Flächenheizeinrichtungen in Fußböden und/oder in Raumwände integriert. Sie unterscheiden sich von punktförmigen Heizkörpern oder Radiatoren, die mit vergleichsweise hohen Temperaturen und Konvektion arbeiten.

Eine Flächenheizeinrichtung umfasst üblicherweise zumindest einen Heizkreis, der eine Vorlaufleitung und eine Rücklaufleitung für vergleichsweise kaltes Wärmeträgermedium aufweist. Der jeweilige Heizkreis ist über seine Vorlaufleitung an eine Zulaufleitung für vergleichsweise warmes Wärmeträgermedium angeschlossen, an die gleichzeitig mehrere Heizkreise der Flächenheizeinrichtung anschließbar sind, bspw. um innerhalb eines einzigen Raums mehrere Heizkreise parallel zu realisieren oder um in mehreren Räumen jeweils wenigstens einen Heizkreis vorzusehen. Ferner ist der jeweilige Heizkreis über seine Rücklaufleitung an eine Ablaufleitung vergleichsweise kaltes Wärmeträgermedium angeschlossen, an die mehrere Heizkreise anschließbar sind. Das Wärmeträgermedium ist üblicherweise flüssig, also eine Wärmeträgerflüssigkeit. Als Wärmeträgerflüssigkeit wird üblicherweise Wasser verwendet. Zulaufleitung und Ablaufleitung bilden einen Primärkreis, während Vorlaufleitung und Rücklaufleitung einen Sekundärkreis bilden.

Moderne Flächenheizeinrichtungen können außerdem je Heizkreis mit einer Anschlussbox ausgestattet sein, die in dem mit dem Heizkreis zu beheizenden Raum oder Raumabschnitt montierbar ist. Eine derartige Anschlussbox umfasst insbesondere ein Vorlaufregelventil, das zur Temperaturregelung des zu beheizenden Raums oder Raumabschnitts mit einem Thermostatkopf gekoppelt ist, bspw. über ein Kapillarrohr. Auf diese Weise kann die Temperatur des zu beheizenden Raums oder Raumabschnitts - wie bei einem Heizkörper - ohne elektrische Energie reguliert werden.

Ein gattungsgemäßes Gebäude ist aus der DE 296 11 577 U1 bekannt und zeichnet sich dadurch aus, dass die jeweilige Flächenheizeinrichtung mit mehreren Heizkreisen ausgestattet ist, die jeweils eine Vorlaufleitung und eine Rücklaufleitung aufweisen, dass der jeweilige Heizkreis über seine Vorlaufleitung an eine Zulaufleitung angeschlossen ist, an die mehrere Heizkreise angeschlossen sind, und über seine Rücklaufleitung an eine Ablaufleitung angeschlossen ist, an die mehrere Heizkreise angeschlossen sind, dass für jeden Heizkreis eine eigene Anschlussbox vorgesehen ist, die in dem mit dem Heizkreis zu beheizenden Raum oder Raumabschnitt montiert ist und die in einem Boxinnenraum eine Rücklaufkupplung aufweist, dass die Anschlussbox ein Gehäuse aufweist, das den Boxinnenraum beinhaltet, dass im Boxinnenraum die Rücklaufleitung über einen an der Rücklaufkupplung ausgebildeten Rücklaufanschluss und die Ablaufleitung über einen an der Rücklaufkupplung ausgebildeten Ablaufanschluss an die Rücklaufkupplung angeschlossen sind, dass an die jeweilige Anschlussbox genau vier Leitungen angeschlossen sind, nämlich die Zulaufleitung, die Ablaufleitung, die Vorlaufleitung und die Rücklaufleitung, und dass ein erstes Regelventil vorgesehen ist, das zur Temperaturregelung des zu beheizenden Raums oder Raumabschnitts mit einem Thermostatkopf gekoppelt ist, der an einer dem zu beheizenden Raum oder Raumabschnitt ausgesetzten Außenseite der Anschlussbox angeordnet ist.

Die vorliegende Erfindung beschäftigt sich mit dem Problem, für ein Gebäude der eingangs genannten Art eine verbesserte Ausführungsform anzugeben, die sich insbesondere durch einen reduzierten Installationsaufwand bzw. durch eine vereinfachte Installation auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, in einem Boxinnenraum der Anschlussbox sowohl eine Vorlaufkupplung als auch eine Rücklaufkupplung anzuordnen, sodass im Boxinnenraum einerseits die Zulaufleitung und die Vorlaufleitung an die Vorlaufkupplung anschließbar sind, während andererseits die Rücklaufleitung und die Ablaufleitung an die Rücklaufkupplung anschließbar sind. Durch die Verwendung einer derartigen Anschlussbox können für den jeweiligen Heizkreis die vier erforderlichen Anschlüsse für den Primärkreis und den jeweiligen Sekundärkreis zentral an einer einzigen Stelle des jeweiligen, zu beheizenden Raums oder Raumabschnitts, nämlich im Boxinnenraum miteinander fluidisch verbunden werden. Der Leitungsaufbau der Flächenheizeinrichtung gestaltet sich dadurch übersichtlicher und kann dadurch einfacher realisiert werden. Ferner ergibt sich für den jeweiligen Monteur eine erhebliche Vereinfachung, da er insgesamt vier Leitungen einfach an einer einzigen Stelle, nämlich in der Anschlussbox montierten bzw. miteinander koppeln kann. Auch für Wartungszwecke, Regelungszwecke und zur Einstellung sowie zum Spülen und Entlüften ergeben sich extreme Vorteile, da sämtliche Funktionalitäten in diese Anschlussbox integriert werden können.

Die Anschlussbox besitzt ein Gehäuse, in dem sich der Boxinnenraum befindet und an dem die Kupplungen befestigt sind. Hierdurch wird eine einfache handhabbare Montageeinheit geschaffen.

Erfindungsgemäß ist ein erstes Regelventil vorgesehen, das zur Temperaturregelung des zu beheizenden Raums oder Raumabschnitts mit einem Thermostatkopf gekoppelt ist, bspw. über ein Kapillarrohr, wobei der Thermostatkopf an einer dem zu beheizenden Raum oder Raumabschnitt ausgesetzten Außenseite der Anschlussbox angeordnet ist. Dieses Regelventil arbeitet fremdenergiefrei, kommt also insbesondere ohne elektrische Energie aus, um die gewünschte Temperaturregelung zu bewirken. Dieses Regelventil kann in eine dazu passende Aufnahme eingebaut werden, die hierzu an der Vorlaufkupplung oder an der Rücklaufkupplung ausgebildet ist. Bevorzugt ist dabei die erfindungsgemäße Anordnung des ersten Regelventils in der Vorlaufkupplung, so dass es als Vorlaufregelventil arbeitet. Die Anschlussbox kann bspw. in einer Wand des zu beheizenden Raums versenkt angeordnet sein, derart, dass nur noch ein die zuvor genannte Außenseite bildender Deckel sichtbar ist, der insbesondere bündig mit der Wand abschließt oder auf der Wand aufliegt. Mit Hilfe eines derartigen Regelventils kann durch manuelles Drehen am Thermostatkopf die jeweilige Wunschtemperatur eingestellt werden. Über das als Vorlaufregelventil dienende, in der Vorlaufkupplung angeordnete Regelventil kann dann der Volumenstrom des warmen Vorlaufs von der Zuführleitung in die Vorlaufleitung geregelt werden.

Die Montage der Anschlussbox erfolgt somit bevorzugt unter Putz, während ihr Deckel putzbündig angeordnet ist.

Der Thermostatkopf kann dabei eine Sperrstellung besitzen, die dazu führt, dass das erste Regelventil in eine Sperrstellung überführt wird, in welcher es - je nach Einbaulage - die fluidische Verbindung zwischen Zulaufleitung und Vorlaufleitung innerhalb der Vorlaufkupplung oder die fluidische Verbindung zwischen der Rücklaufleitung und der Ablaufleitung innerhalb der Rücklaufkupplung sperrt. Auf diese Weise kann der jeweilige Heizkreis vorlaufseitig von der Zulaufleitung oder rücklaufseitig von der Ablaufleitung getrennt werden.

Darüber hinaus kann der Thermostatkopf auch mit wenigstens einer Kühlstellung versehen sein, die bspw. für einen Sommerbetrieb der Flächenheizeinrichtung eine Kühlung des jeweiligen Raums oder Raumabschnitts über den jeweiligen Heizkreis ermöglicht, sofern die Heizungsanlage das jeweilige Wärmeträgermedium, insbesondere Wasser, in der Zulaufleitung fördert.

Zweckmäßig kann die Vorlaufkupplung im montierten Zustand der Anschlussbox oberhalb der Rücklaufkupplung im Boxinnenraum angeordnet sein. Es liegen Vorlaufkupplung und Rücklaufkupplung in einer Ebene, so dass die Zulaufleitung und die Vorlaufleitung seitlich von der Rücklaufleitung und der Ablaufleitung angeordnet sind, wobei die vier Leitungen in einem zur Anschlussbox führenden Anschlussabschnitt parallel zueinander verlaufen und im Wesentlichen in einer gemeinsamen Ebene liegen.

Entsprechend einer anderen vorteilhaften Ausführungsform kann die Vorlaufkupplung ein (erstes) Entlüftungsventil aufweisen, wodurch es bedarfsabhängig möglich ist, den Heizkreis zu entlüften. Für die Montage des (ersten) Entlüftungsventils kann die Vorlaufkupplung eine dazu passende Aufnahme aufweisen. Erfindungsgemäß ist ein Sperrventil oder Absperrventil vorgesehen, das in eine an der Rücklaufkupplung ausgebildete Aufnahme eingebaut ist und mit dem - je nach Einbauort - die fluidische Verbindung zwischen Rücklaufleitung und Ablaufleitung bzw. zwischen Zulaufleitung und Vorlaufleitung zum Deaktivieren des jeweiligen Heizkreises, bevorzugt manuell, gesperrt werden kann. Mit Hilfe dieses Sperrventils kann somit der jeweilige Heizkreis rücklaufseitig oder vorlaufseitig von der Ablaufleitung getrennt werden. In Verbindung mit der zuvor genannten Sperrstellung für das erste Regelventil ist es somit möglich, den jeweiligen Heizkreis vorlaufseitig und von der Zulaufleitung und rücklaufseitig von der Ablaufleitung zu trennen, wodurch der jeweilige Heizkreis vollständig von der Versorgung mit Wärmeträgermedium entkoppelt werden kann.

Entsprechend einer anderen vorteilhaften Ausführungsform kann ein zweites Regelventil vorgesehen sein, das einen Strom des Wärmeträgermediums abhängig von der Temperatur des Wärmeträgermediums steuert. Das zweite Regelventil ist dabei in eine dafür vorgesehene Aufnahme eingebaut, die hierfür an der Vorlaufkupplung oder an der Rücklaufkupplung ausgebildet ist. Im Unterschied zu dem vorstehend genannten ersten Regelventil, welches den Durchfluss des Wärmeträgermediums abhängig von der einzuregelnden Raumtemperatur regelt, regelt das hier vorgestellte zweite Regelventil den Durchfluss des Wärmeträgermediums abhängig von der Wärmeträgermediumtemperatur. Auch ein derartiges zweites Regelventil arbeitet autark, also ohne Fremdenergie, insbesondere ohne elektrischen Strom. Zur Realisierung eines derartigen Regelventils kann bspw. ein Ventilglied mit Hilfe einer Schließdruckfeder in einen Ventilsitz vorgespannt sein, wobei außerdem eine Öffnungsdruckfeder vorgesehen ist, die das Ventilglied zum Abheben vom Ventilsitz antreibt. In bekannter Weise definiert der Hub des Ventilglieds, mit dem es vom Ventilsitz abhebt, den Volumenstrom durch das Ventil. Solange das Ventilglied im Ventilsitz sitzt, sperrt das Ventil den Volumenstrom. Zur Realisierung der hier gewünschten Regelung des Wärmeträgermediumstroms besitzen die beiden Federn unterschiedliche Temperaturkennlinien, d. h., ihre Vorspannkraft ändert sich abhängig von der Temperatur unterschiedlich. So kann bspw. mit abnehmender Temperatur die Federkraft der Schließdruckfeder rascher abfallen als die Öffnungskraft der Öffnungsdruckfeder, so dass ab einer bestimmten Temperatur die Öffnungskraft überwiegt. Erreicht wird ein derartiger unterschiedlicher Zusammenhang zwischen Federkraft und Temperatur bspw. dadurch, dass mindestens eine der Federn mit Hilfe einer Memorylegierung oder Formgedächtnislegierung hergestellt ist. Bspw. kann die Öffnungsdruckfeder mittels einer derartigen Memorielegierung hergestellt sein und bei Überschreiten einer vorbestimmten Grenztemperatur ihren Öffnungsdruck stark verlieren, sodass dann die Schließkraft der Schließdruckfeder überwiegt und der Wärmeträgermediumstrom entsprechend reduziert oder sogar gesperrt wird. Auf diese Weise kann die Temperatur des Wärmeträgermediums innerhalb des jeweiligen Heizkreises auf einen vorbestimmten Wert eingestellt werden. Dies ist insbesondere dann von enormem Vorteil, wenn die Flächenheizeinrichtung mit einer Heizkörperheizeinrichtung kombiniert werden soll. In diesem Fall kann nämlich eine Heizanlage verwendet werden, die nur mit einer einzigen einstellbaren Temperatur arbeitet, nämlich auf einem vergleichsweise hohen Temperaturniveau, das für den Betrieb der Heizkörperheizeinrichtung erforderlich ist. Mit Hilfe des vorzugsweise rücklaufseitig angeordneten (zweiten) Regelventils kann in jedem Heizkreis für sich die Temperatur des Wärmeträgermediums auf das Niedertemperaturniveau einer Flächenheizeinrichtung abgeregelt werden.

Entsprechend einer anderen vorteilhaften Ausführungsform kann ein Spülanschluss vorgesehen sein, über den Wärmeträgerflüssigkeit, also vorzugsweise Wasser, dem Heizkreis zuleitbar oder daraus ausleitbar ist, wobei der Spülanschluss in eine an der Vorlaufkupplung oder an der Rücklaufkupplung ausgebildete Aufnahme eingebaut ist. Das Zuleiten kann bspw. für eine Erstbefüllung oder für eine Wiederbefüllung des Heizkreises erforderlich sein. Ein Ausleiten kann bspw. für Wartungszwecke erforderlich sein.

Die Rücklaufkupplung kann ein (zweites) Entlüftungsventil aufweisen, um auch eine rücklaufseitige Entlüftung vornehmen zu können. Das (zweite) Entlüftungsventil ist dabei in eine an der Rücklaufkupplung ausgebildete Aufnahme eingebaut. Dieses (zweite) Entlüftungsventil kann insbesondere in das zuvor genannte Sperrventil integriert sein.

Bei einer weiteren Ausführungsform kann die Rücklaufkupplung einen Wärmemengenzähler aufweisen, der in eine an der Rücklaufkupplung ausgebildete Aufnahme eingebaut ist. Der Wärmemengenzähler kann ferner so ausgestaltet sein, dass er drahtlos auslesbar ist und/oder dass er eine Funkübertragung der gemessenen bzw. gezählten Wärmemenge ermöglicht. Insbesondere kann dann auch eine Fernabfrage des Zählerstandes durchgeführt werden, was die Handhabung der Heizeinrichtung erheblich vereinfacht.

Durch die vorstehend genannten, unterschiedlichen Komponenten kann der Integrationsgrad der Anschlussbox immer weiter gesteigert werden, worin sich der besondere Vorteil der hier vorgestellten Anschlussbox bzw. der zugehörigen Flächenheizeinrichtung zeigt. Sämtliche Komponenten sind in der Anschlussbox untergebracht, wodurch eine sehr kompakte Anordnung mit guter Zugänglichkeit geschaffen wird.

Von besonderem Vorteil ist auch eine Ausführungsform, bei der zumindest eine Aufnahme der Vorlaufkupplung und wenigstens eine Aufnahme der Rücklaufkupplung gleich ausgestaltet sind, so dass zumindest zwei Elemente der Gruppe erstes Regelventil, erstes Entlüftungsventil, Sperrventil, zweites Regelventil, Spülanschluss, zweites Entlüftungsventil und Wärmemengenzähler gegeneinander austauschbar sind. Im Falle eines fehlerhaften Anschlusses von Zulaufleitung, Vorlaufleitung, Rücklaufleitung und Ablaufleitung an die Kupplungen kann durch die Austauschbarkeit der einzelnen genannten Komponenten ein funktionsfähiges System Hergestellt werden, ohne dass die Installation der einzelnen Leitungen wieder geändert werden muss.

Sofern mehrere Heizkreise an die gemeinsame Zulaufleitung und die gemeinsame Rücklaufleitung angeschlossen sind, werden die Zulaufleitung und die Rücklaufleitung entsprechend einer vorteilhaften Ausführungsform nach dem sog. Tichelmann-System verlegt. Das Tichelmann-System charakterisiert sich dadurch, dass die Leitungslängen von Zulauf und Ablauf jeweils von und bis zur Anschlussbox bei allen Heizkreisen etwa gleich groß ist. Hierdurch sind die Strömungswiderstände im Zulauf und im Ablauf für alle Heizkreise gleich, was das Einstellen der Heizkreise bzw. der Flächenheizeinrichtung erheblich vereinfacht.

Besonders zweckmäßig ist dabei eine Ausführungsform, bei der in allen Zulaufleitungen der Heizkreise einerseits und in allen Ablaufleitungen der Heizkreise andererseits jeweils konstante Rohrquerschnitte vorliegen. Dadurch gestalten sich die Zulaufleitungen und Ablaufleitungen erheblich einfacher, was den Installationsaufwand reduziert. Dies ist möglich, da bei einer Verlegung nach dem Tichelmann-System in allen Heizkreisen der Flächenheizeinrichtung im Wesentlichen die gleichen Durchströmungswiderstände in den Zulaufleitungen und in den Ablaufleitungen vorliegen, sodass Drosselstellen, die mit Hilfe mit reduzierten Rohrquerschnitten realisiert werden können, um Durchströmungswiderstände auszugleichen, entfallen können.

Die Zulaufleitungen und Ablaufleitungen mehrerer Flächenheizeinrichtungen können jeweils an einen zentralen Zulauf bzw. an einen zentralen Ablauf angeschlossen sein, der mit einer zentralen Heizanlage verbunden ist.

Eine derartige Heizanlage kann entsprechend einer vorteilhaften Ausführungsform einen Wärmeerzeuger zum Aufheizen des Wärmeträgermediums und eine Pumpe zum Fördern des Wärmeträgermediums aufweisen. Um die weiter oben bereits erwähnte, wenigstens eine Kühlstellung des Thermostatkopfs realisieren zu können, kann die Heizanlage entsprechend einer vorteilhaften Ausführungsform so ausgestaltet sein, dass für einen Sommerbetrieb auch bei ausgeschaltetem oder invers als Kälteerzeuger betriebenem Wärmeerzeuger die Pumpe betrieben werden kann.

Gemäß einer Weiterbildung kann der Wärmeerzeuger eine Wärmepumpe aufweisen, die einen Wärmepumpenkreis umfasst, der einerseits mit dem Wärmeträgermedium und andererseits mit einer natürlichen Wärmequelle oder Wärmesenke wärmeübertragend gekoppelt ist. Natürliche Wärmequellen bzw. Wärmesenken sind insbesondere die Umgebungsluft, ein Gewässer und das Erdreich. Die Wärmekopplung erfolgt in üblicher Weise über Wärmeübertrager, insbesondere mit einem separaten Wärmeträgermediumkreis, der offen oder geschlossen konzipiert sein kann. Die Wärmepumpe lässt sich invers quasi als Kühlkreis betreiben, um die für den Sommerbetrieb benötigte Kühlung zu realisieren.

Ein weiterer besonderer Vorteil ergibt sich für die hier vorgestellte Flächenheizeinrichtung, wenn die Zulaufleitung und optional auch die Ablaufleitung in einer Dämmung des Fußbodens untergebracht wird, die sich unterhalb des jeweiligen Heizkreises erstreckt und die sich insbesondere auch unterhalb eines Estrichs erstreckt, in den der jeweilige Heizkreis eingebettet ist. Durch diese Maßnahme ergibt sich eine intensive thermische Isolation für die Zulaufleitung, wodurch eine unkontrollierte Temperaturabgabe über die Zulaufleitung vermieden bzw. reduziert werden kann.

Weitere wichtige Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine stark vereinfachte schaltplanartige Prinzipdarstellung einer Flächenheizeinrichtung,
- Fig. 2: eine Ansicht einer Anschlussbox, die mit einem Deckel verschlossen ist,
- Fig. 3: eine Ansicht der Anschlussbox bei entferntem Deckel, jedoch ohne daran angeschlossene Leitungen,
- Fig. 4: eine Ansicht wie in Fig. 3, jedoch mit angeschlossenen Leitungen,
- Fig. 5: eine stark vereinfachte Prinzipdarstellung eines Rücklaufregelventils,
- Fig. 6: ein vereinfachter Schnitt durch eine Wand und einen Boden im Bereich einer Anschlussbox.

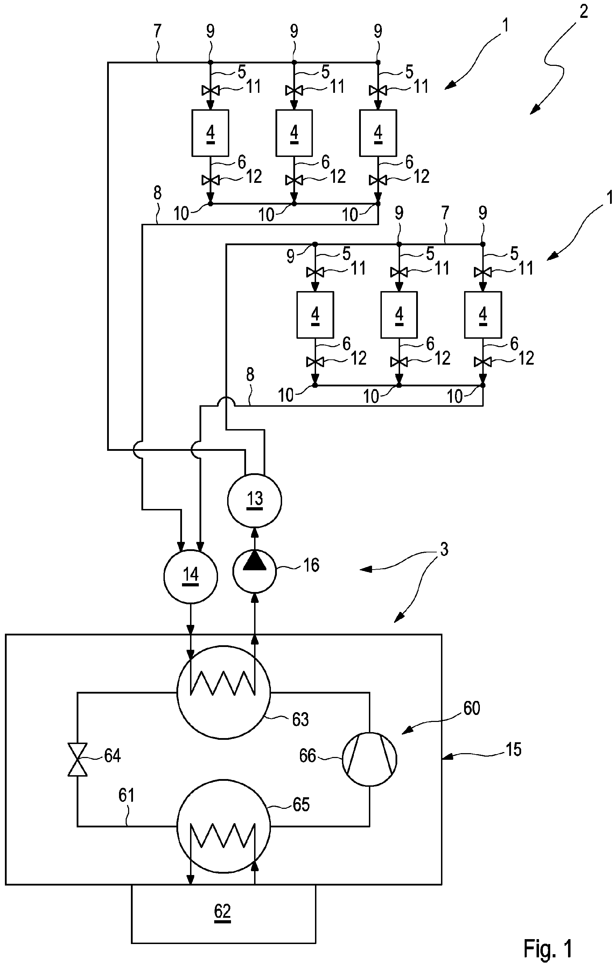

Fig. 1 zeigt stark vereinfacht zwei Flächenheizeinrichtungen 1, die ein Heizungssystem 2 bilden, das zumindest zwei derartige Flächenheizeinrichtungen 1 und eine gemeinsame Heizanlage 3 aufweist.

Die jeweilige Flächenheizeinrichtung 1 weist zumindest einen Heizkreis 4 auf. Im Beispiel weist die jeweilige Heizeinrichtung 1 rein exemplarisch und ohne Beschränkung der Allgemeinheit genau drei derartige Heizkreise 4 auf. Der jeweilige Heizkreis 4 weist eine Vorlaufleitung 5 und eine Rücklaufleitung 6 auf. Der jeweilige Heizkreis 4 ist über seine Vorlaufleitung 5 an eine Zulaufleitung 7 angeschlossen und über seine Rücklaufleitung 6 an eine Ablaufleitung 8 angeschlossen. Zweckmäßig sind alle Heizkreise 4 der jeweiligen Flächenheizeinrichtung 1 an die gleiche Zulaufleitung 7 bzw. an die gleiche Ablaufleitung 8 angeschlossen. Entsprechende zulaufseitige Anschlussstellen sind mit 9 bezeichnet, während entsprechende rücklaufseitige Anschlussstellen mit 10 bezeichnet sind.

Die Heizkreise 4 sind jeweils von der Zulaufleitung 7 mit Hilfe von zulaufseitigen Sperreinrichtungen 11 und von der Ablaufleitung 8 mit Hilfe von rücklaufseitigen Sperreinrichtungen 12 trennbar bzw. entkoppelbar.

Die Zulaufleitungen 7 der beiden Heizeinrichtungen 1 sind an einen gemeinsamen zentralen Zulauf 13 angeschlossen. Die Ablaufleitungen 8 der beiden Heizeinrichtungen 1 sind an einen gemeinsamen zentralen Ablauf 14 angeschlossen. Zulauf 13 und Ablauf 14 führen zur Heizanlage 3, die im Beispiel einen Wärmeerzeuger 15 und eine Pumpe 16 zum Antreiben des jeweiligen Wärmeträgermediums, vorzugsweise Wasser, aufweist.

Wie Fig. 1 außerdem entnehmbar ist, sind die Heizkreise 4 innerhalb der jeweiligen Heizeinrichtung 1 nach dem Tichelmann-System verlegt, sodass die Leitungslängen vom Zulauf 13 zur zulaufseitigen Anschlussstelle 9 und von der ablaufseitigen Anschlussstelle 10 zum Ablauf 14 in der Summe für jeden Heizkreis 4 etwa gleich groß sind.

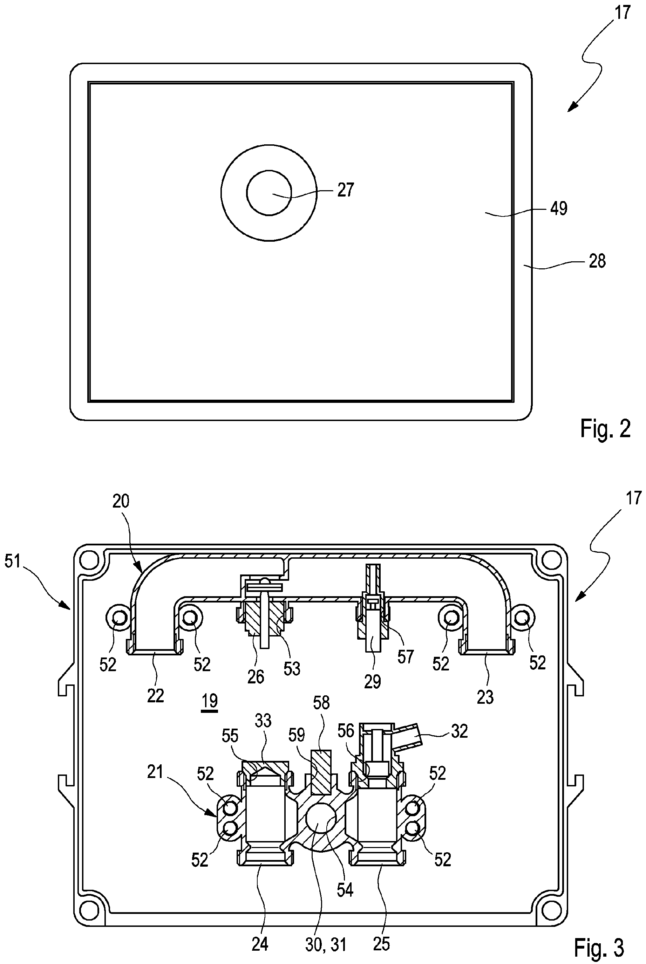

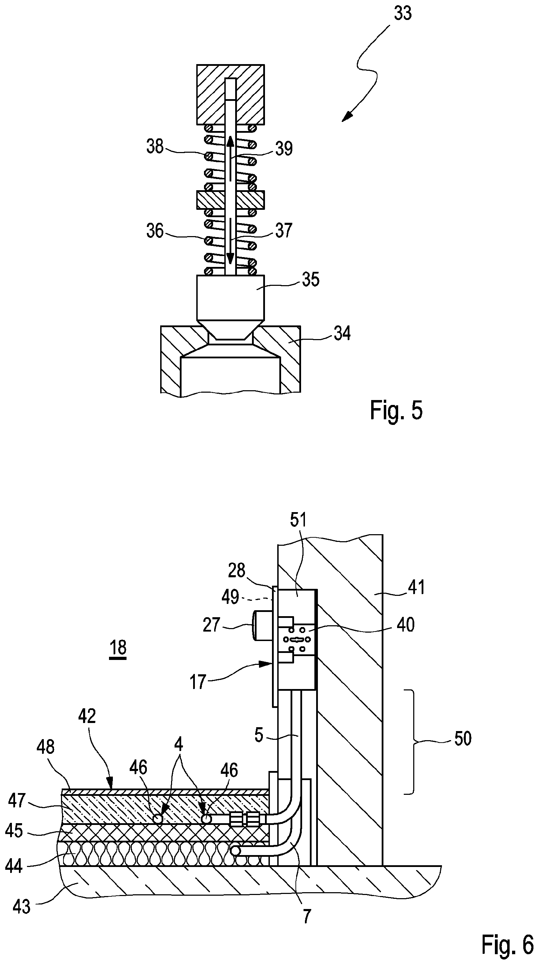

Die jeweilige Flächenheizeinrichtung 1 ist außerdem für jeden Heizkreis 4 mit einer in den Figuren 2 bis 4 dargestellten Anschlussbox 17 ausgestattet. Die jeweilige Anschlussbox 17 ist in einem in Fig. 6 mit 18 bezeichneten Raum oder Raumabschnitt montiert, der mit dem jeweiligen, der Anschlussbox 17 zugeordneten Heizkreis 4 beheizt werden soll.

Der Wärmeerzeuger 15 umfasst gemäß einer bevorzugten Ausführungsform eine Wärmepumpe 60, mit deren Hilfe einer natürlichen Wärmequelle 62 Wärme entzogen und dem Wärmeträgermedium des Heizungssystems 2 zugeführt werden kann. Hierzu kann die Wärmepumpe 60 in üblicher Weise mit einem Wärmepumpenkreis 61 arbeiten, der einen ersten Wärmeübertrager 63, eine Drosselstelle 64, einen zweiten Wärmeübertrager 65 und eine Fördereinrichtung 66 enthält und in dem ein Arbeitsmedium zirkuliert. Im Normalbetrieb des Wärmepumpenkreises 61 arbeitet der erste Wärmeübertrager 63 als Kondensator, um Wärme vom Arbeitsmedium an das Wärmeträgermedium des Heizungssystems abzugeben, während der zweite Wärmeübertrager 65 als Verdampfer arbeitet, um Wärme von der Wärmequelle auf das Arbeitsmedium einzuleiten. Besonders vorteilhaft ist eine Ausführungsform, bei welcher der Wärmeerzeuger 15 als Kälteerzeuger, also invers betrieben werden kann. In einem solchen Inversbetrieb dient die Wärmequelle 62 als Wärmesenke 62 und der erste Wärmeübertrager 63 arbeitet dann als Verdampfer, um dem Wärmeträgermedium des Heizungssystems 2 Wärme zu entziehen, während dann der zweite Wärmeübertrager 65 als Kondenstaor arbeitet, um die Wärme vom Arbeitsmedium auf die Wärmesenke 62 zu übertragen. Es können auch zwei getrennte Wärmepumpenkreise 61 vorgesehen sein, den Normalbetrieb und den Inversbetrieb zu realisieren.

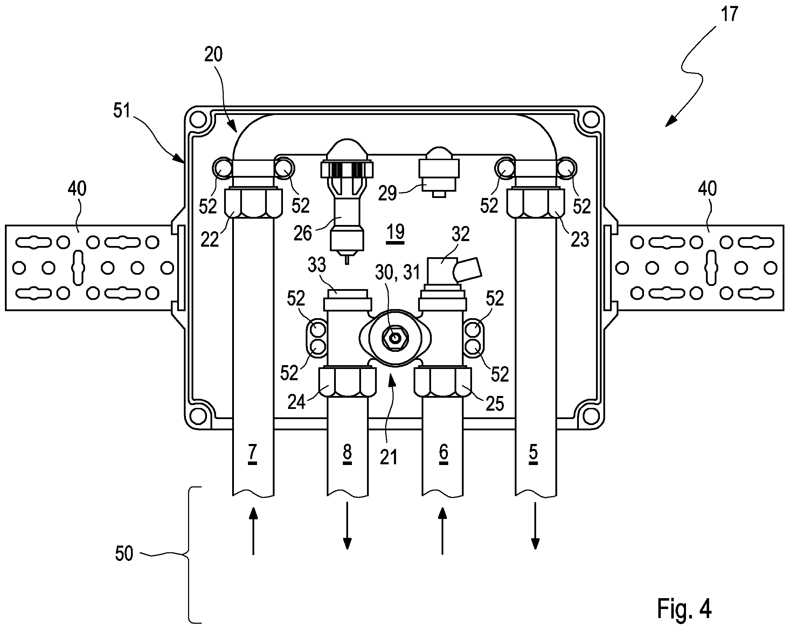

Gemäß den Figuren 3 und 4 weist die Anschlussbox 17 in einem Boxinnenraum 19 eine Vorlaufkupplung 20 und eine Rücklaufkupplung 21 auf. Die Vorlaufkupplung 20 besitzt einen Zulaufanschluss 22, über den gemäß Fig. 4 die Zulaufleitung 7 an die Vorlaufkupplung 20 anschließbar ist. Die Vorlaufkupplung 20 weist außerdem einen Vorlaufanschluss 23 auf, über den gemäß Fig. 4 die jeweilige Vorlaufleitung 5 des zugehörigen Heizkreises 4 an die Vorlaufkupplung 20 anschließbar ist. Über die Vorlaufkupplung 20 sind dann die Zulaufleitung 7 und die Vorlaufleitung 5 miteinander fluidisch verbunden.

Die Anschlussbox 17 weist ein Gehäuse 51 auf, das den Boxinnenraum 19 beinhaltet. Die Kupplungen 20, 21 sind am Gehäuse 51 mittels Befestigungselementen 52 befestigt.

Die Rücklaufkupplung 21 weist einen Ablaufanschluss 24 auf, an den gemäß Fig. 4 die Ablaufleitung 8 an die Rücklaufkupplung 21 anschließbar ist. Außerdem weist die Rücklaufkupplung 21 einen Rücklaufanschluss 25 auf, an den gemäß Fig. 4 die jeweilige Rücklaufleitung 6 des zugehörigen Heizkreises 4 an die Rücklaufkupplung 21 anschließbar ist. Dementsprechend sind die Rücklaufleitung 6 und die Ablaufleitung 8 über die Rücklaufkupplung 21 fluidisch miteinander verbunden. Sämtliche Anschlüsse 22,23,24,25 befinden sich dabei innerhalb des Boxinnenraums 19. Ferner sind die Anschlüsse 22, 23, 24,25 insbesondere gleich ausgestaltet.

Wie den Figuren 2 und 6 entnehmbar ist, weist die Anschlussbox 17 einen Deckel 49 auf, der flächenbündig in die Außenseite 28 eingepasst ist und der den Boxinnenraum 19 verschließt.

Die Vorlaufkupplung 20 weist im Beispiel ein als Vorlaufregelventil dienendes erstes Regelventil 26 auf, das in eine zugehörige Aufnahme 53 der Vorlaufkupplung 20 eingebaut ist und mit einem in Fig. 2 gezeigten Thermostatkopf 27 gekoppelt ist. Eine derartige Kopplung kann bspw. über ein hier nicht gezeigtes Kapillarrohr realisiert werden. Der Thermostatkopf 27 ist gemäß Fig. 2 an einer dem Betrachter zugewandten Außenseite 28 der Anschlussbox 17 angeordnet, die gemäß Fig. 6 dem zu beheizenden Raum 18 bzw. Raumabschnitt 18 ausgesetzt ist.

Die Heizungsanlage 3 kann so konfiguriert sein, dass sie einen Sommerbetrieb ermöglicht, bei dem der Wärmeerzeuger 15 ausgeschaltet ist oder invers als Kälteerzeuger betrieben wird, während die Pumpe 16 in Betrieb ist, um kaltes bzw. unbeheiztes oder gekühltes Wärmeträgermedium im Leitungssystem zirkulieren zu lassen. Der Thermostatkopf 27 kann zu diesem Zweck mit wenigstens einer Kühlstellung ausgestattet sein, die für eine vorbestimmte Temperatur eine Strömung des Wärmeträgermediums durch den jeweiligen Heizkreis 4 zulässt.

Darüber hinaus kann die Vorlaufkupplung 20 ein als Vorlaufentlüftungsventil dienendes erstes Entlüftungsventil 29 aufweisen, das in eine zugehörige Aufnahme 57 der Vorlaufkupplung 20 eingebaut ist und mit dessen Hilfe eine vorlaufseitige Entlüftung des jeweiligen Heizkreises 4 durchführbar ist. Im Beispiel ist die Vorlaufkupplung 20 oberhalb der Rücklaufkupplung 21 in der Anschlussbox 17 angeordnet.

Die vier Anschlüsse 22 bis 25 der beiden Kupplungen 20,21 sind dabei jeweils parallel zueinander ausgerichtet, insbesondere sind die Anschlüsse 22 bis 25 für die in Fig. 6 gezeigte Einbausituation vertikal nach unten ausgerichtet, sodass die zugehörigen Leitungen 5 bis 8 in einem an die Anschlussbox 17 angrenzenden Anschlussabschnitt 50 (vgl. Fig. 4 und 6) parallel zueinander vertikal verlegt werden können. Insbesondere liegen die Kupplungen 20, 21 und die Leitungen 5, 6, 7, 8 in diesem Anschlussabschnitt 50 in einer gemeinsamen Ebene.

Die Rücklaufkupplung 21 kann mit einem als Rücklaufsperrventil dienenden Sperrventil 30 ausgestattet sein, das in eine dazu passende Aufnahme 54 der Rücklaufkupplung 21 eingebaut ist und mit dessen Hilfe die fluidische Verbindung zwischen dem Rücklaufanschluss 25 und dem Ablaufanschluss 24 und somit letztlich die fluidische Verbindung zwischen der Rücklaufleitung 6 und der Ablaufleitung 8 gesperrt werden kann, falls der jeweilige Heizkreis 4 deaktiviert werden soll. Zusätzlich kann auch das erste Regelventil 26 bzw. der zugehörige Thermostatkopf 27 über eine Sperrstellung verfügen, mit deren Hilfe der Zulaufanschluss 22 und der Vorlaufanschluss 23 bzw. die Zulaufleitung 7 und die Vorlaufleitung 5 fluidisch entkoppelt werden können. Das Sperrventil 30 und das sperrbare erste Regelventil 26 bilden dabei die mit Bezug auf Fig. 1 erwähnten vorlaufseitigen und rücklaufseitigen Sperreinrichtungen 11, 12.

Die Rücklaufkopplung 21 kann außerdem mit einem als Rücklaufentlüftungsventil dienenden zweiten Entlüftungsventil 31 ausgestattet sein, das in eine entsprechende Aufnahme 54 der Rücklaufkopplung 21 eingebaut ist und bei der hier gezeigten Ausführungsform in das Sperrventil 30 integriert ist oder alternativ dazu eingebaut sein kann.

Die Rücklaufkopplung 21 weist hier außerdem einen Spülanschluss 32 auf, der in eine entsprechende Aufnahme 56 der Rücklaufkopplung 21 eingebaut ist und mit dessen Hilfe Wärmeträgermedium dem jeweiligen Heizkreis 4 zugeführt werden kann und ebenso kann über einen derartigen Spülanschluss 32 das Wärmeträgermedium aus dem jeweiligen Heizkreis 4 ausgeleitet werden.

Bei der hier gezeigten Ausführungsform ist die Rücklaufkupplung 21 außerdem mit einem als Rücklaufregelventil dienenden zweiten Regelventil 33 ausgestattet, das in eine zugehörige Aufnahme 55 der Rücklaufkopplung 21 eingebaut ist und mit dessen Hilfe ein Rücklaufstrom an Wärmeträgermedium abhängig von der Temperatur des Wärmeträgermediums im Rücklaufstrom gesteuert werden kann. Ein derartiges zweites Regelventil 33 ist vereinfacht in Fig. 5 dargestellt. Es umfasst einen Ventilsitz 34 und ein damit zusammenwirkendes Ventilglied 35. Das Ventilglied 35 ist bspw. mittels einer Schließdruckfeder 36 entsprechend einem Pfeil 37 in die Schließrichtung, also gegen den Ventilsitz 34 vorgespannt. Mit Hilfe einer Öffnungsdruckfeder 38 ist das Ventilglied 35 gleichzeitig entsprechend einem Pfeil 39 in der Gegenrichtung, also in der Öffnungsrichtung aus dem Ventilsitz 34 heraus vorgespannt. Die beiden Federn 36,38 besitzen hinsichtlich der Temperatur unterschiedliche Federkennlinien. Insbesondere kann zumindest eine der beiden Federn 36,38 mit Hilfe eines Memorymetalls bzw. mit Hilfe einer Formgedächtnislegierung hergestellt sein. Beim Überschreiten einer vorbestimmten Temperatur (Schalttemperatur) überwiegt die Schließkraft 37, sodass das als Rücklaufregelventil verwendete zweite Regelventil 33 den Rücklaufstrom und somit den gesamten Strom des Wärmeträgermediums durch den jeweiligen Heizkreis 4 sperrt. Somit kann das Wärmeträgermedium im jeweiligen Heizkreis 4 die vorbestimmte Schalttemperatur nicht übersteigen. Unterschreitet dagegen das Wärmeträgermedium im Rücklauf die genannte Schalttemperatur, überwiegen mehr und mehr wieder die Öffnungskräfte 39, sodass ein entsprechender Rücklaufstrom eingestellt wird, sodass warmes Wärmeträgermedium nachströmen kann. Auch diese Temperaturregelung im Rücklaufstrom erfolgt ohne Fremdenergie.

Gemäß Fig. 3 kann außerdem ein Wärmemengenzähler 58 vorgesehen sein, der bevorzugt an die Rücklaufkupplung 21 angebaut ist, wozu diese mit einer geeigneten Aufnahme 59 zum Einsetzen des Wärmemengenzählers 58 ausgestattet ist. Der Wärmemengenzähler 58 kann die erfasste Wärmemenge digital speichern und selbsttätig oder auf Abruf übertragen, insbesondere via Datenfernübertragung. Dies kann insbesondere über funk, also drahtlos erfolgen.

Erkennbar sind die Aufnahmen 53, 55 und 56 baugleich ausgestaltet, so dass es ohne weiteres möglich ist, das erste Regelventil 26, den Spülanschluss 32 und das zweite Regelventil 33 gegeneinander auszutauschen. Dies kann beispielsweise dann erforderlich werden, falls durch einen Montagefehler in der festen Installation der zugehörigen Leitungen eine Verwechslung zwischen Vorlauf und Rücklauf bzw. zwischen Zulauf und Ablauf stattgefunden hat. Insbesondere können sämtliche verwendeten Aufnahmen 53, 57, 55, 54, 59 und 56 baugleich sein, um die zugehörigen Komponenten beliebig gegeneinander austauschen zu können. Es ist klar, dass dann auch die verwendeten Komponenten baugleiche Anschlussseiten besitzen, um sie hinsichtlich ihrer Montageposition innerhalb der Anschlussbox 17 gegeneinander austauschen zu können.

Gemäß Fig. 4 können an der Anschlussbox 17 bzw. an deren Gehäuse 51 seitliche Laschen 40 befestigt sein, mit deren Hilfe die Anschlussbox 17 wie in Fig. 6 dargestellt, an einer Wand 41 befestigt werden kann. Der Raum 18 wird gemäß Fig. 6 seitlich durch die Wand 41 und nach unten von einem Fußboden 42 begrenzt. Der Fußboden 42 besitzt einen Aufbau, bei dem auf einen Untergrund 43, zum Beispiel aus Beton, zunächst eine thermisch isolierende Dämmschicht 44 aufgebracht wird. Darauf wird eine Dampfsperrschicht 45 aufgebracht. Auf die Dampfsperrschicht 45 wird ein Leitungssystem 46 zur Realisierung des jeweiligen Heizkreises 4 aufgebracht. Ferner wird auf die Sperrschicht 45 eine Estrichschicht 47 aufgebracht, sodass das Leitungssystem 46 des jeweiligen Heizkreises 4 in dem Estrich 47 eingebettet ist. Auf den Estrich 47 wird dann der übliche Fußbodenbelag 48 aufgebracht.

Erkennbar ist nun zumindest die Zulaufleitung 7 in der Dämmschicht 44 verlegt. Außerdem kann optional die Ablaufleitung 8 ebenfalls in der Dämmschicht 44 verlegt werden.

## Patentansprüche

1. Gebäude mit mindestens einer Flächenheizeinrichtung (1) für wenigstens einen Raum (18) des Gebäudes,
- wobei die jeweilige Flächenheizeinrichtung (1) mit mehreren Heizkreisen (4) ausgestattet ist, die jeweils eine Vorlaufleitung (5) und eine Rücklaufleitung (6) aufweisen,
- wobei der jeweilige Heizkreis (4) über seine Vorlaufleitung (5) an eine Zulaufleitung (7) angeschlossen ist, an die mehrere Heizkreise (4) angeschlossen sind, und über seine Rücklaufleitung (6) an eine Ablaufleitung (8) angeschlossen ist, an die mehrere Heizkreise (4) angeschlossen sind,
- wobei für jeden Heizkreis (4) eine eigene Anschlussbox (17) vorgesehen ist, die in dem mit dem Heizkreis (4) zu beheizenden Raum (18) oder Raumabschnitt montiert ist und die in einem Boxinnenraum (19) eine Rücklaufkupplung (21) aufweist,
- wobei die Anschlussbox (17) ein Gehäuse (51) aufweist, das den Boxinnenraum (19) beinhaltet,
- wobei im Boxinnenraum (19) die Rücklaufleitung (6) über einen an der Rücklaufkupplung (21) ausgebildeten Rücklaufanschluss (25) und die Ablaufleitung (8) über einen an der Rücklaufkupplung (21) ausgebildeten Ablaufanschluss (24) an die Rücklaufkupplung (21) angeschlossen sind,
- wobei an die jeweilige Anschlussbox (17) genau vier Leitungen angeschlossen sind, nämlich die Zulaufleitung (7), die Ablaufleitung (8), die Vorlaufleitung (5) und die Rücklaufleitung (6),
- wobei ein erstes Regelventil (26) vorgesehen ist, das zur Temperaturregelung des zu beheizenden Raums (18) oder Raumabschnitts mit einem Thermostatkopf (27) gekoppelt ist, der an einer dem zu beheizenden Raum (18) oder Raumabschnitt ausgesetzten Außenseite (28) der Anschlussbox (17) angeordnet ist,
**dadurch gekennzeichnet,**
- **dass** die Anschlussbox (17) im Boxinnenraum (19) außerdem eine Vorlaufkupplung (20) aufweist,
- **dass** im Boxinnenraum (19) die Zulaufleitung (7) über einen an der Vorlaufkupplung (20) ausgebildeten Zulaufanschluss (22) und die Vorlaufleitung (5) über einen an der Vorlaufkupplung (20) ausgebildeten Vorlaufanschluss (23) an die Vorlaufkupplung (20) angeschlossen sind,
- **dass** das erste Regelventil (26) in eine an der Vorlaufkupplung (20) ausgebildete Aufnahme (53) eingebaut ist,
- **dass** ein Sperrventil (30) vorgesehen ist, mit dem die fluidische Verbindung zwischen Rücklaufleitung (6) und Ablaufleitung (8) zum Deaktivieren des Heizkreises (4) gesperrt werden kann,
- **dass** das Sperrventil (30) in eine an der Rücklaufkupplung (21) ausgebildete Aufnahme (54) eingebaut ist,
- **dass** die Vorlaufkupplung (20) und die Rücklaufkupplung (21) separat am Gehäuse (51) mittels Befestigungselementen (52) befestigt sind,
- **dass** der Zulaufanschluss (22), der Vorlaufanschluss (23), der Ablaufanschluss (24) und der Rücklaufanschluss (25) parallel zueinander und vertikal nach unten ausgerichtet sind,
- **dass** die Vorlaufleitung (5), die Rücklaufleitung (6), die Zulaufleitung (7) und die Ablaufleitung (8) in einem an die Anschlussbox (17) angrenzenden Anschlussabschnitt (50) parallel zueinander und vertikal verlaufen.

2. Gebäude nach Anspruch 1,
**dadurch gekennzeichnet,**
**dass** die Vorlaufleitung (5), die Rücklaufleitung (6), die Zulaufleitung (7) und die Ablaufleitung (8) in diesem Anschlussabschnitt (50) in einer gemeinsamen Ebene liegen.

3. Gebäude nach einem der vorhergehenden Ansprüche,
**dadurch gekennzeichnet,**
**dass** die Vorlaufkupplung (20) ein Entlüftungsventil (29) aufweist, das in eine an der Vorlaufkupplung (20) ausgebildete Aufnahme (57) eingebaut ist.

4. Gebäude nach einem der vorhergehenden Ansprüche
**dadurch gekennzeichnet,**
**dass** ein zweites Regelventil (33) vorgesehen ist, das einen Wärmeträgermediumstrom abhängig von der Temperatur des Wärmeträgermediums steuert, wobei das zweite Regelventil (33) in eine an der Rücklaufkupplung (21) ausgebildete Aufnahme (55) eingebaut ist.

5. Gebäude nach einem der vorhergehenden Ansprüche
**dadurch gekennzeichnet,**
**dass** ein Spülanschluss (32) vorgesehen ist, über den das Wärmeträgermedium dem Heizkreis (4) zuleitbar oder daraus ausleitbar ist, wobei der Spülanschluss (32) in eine an der Vorlaufkupplung (20) oder an der Rücklaufkupplung (21) ausgebildete Aufnahme (56) eingebaut ist.

6. Gebäude nach einem der vorhergehenden Ansprüche
**dadurch gekennzeichnet,**
**dass** die Rücklaufkupplung (21) ein Entlüftungsventil (31) aufweist, das in eine an der Rücklaufkupplung (21) ausgebildete Aufnahme (54) eingebaut ist.

7. Gebäude nach einem der vorhergehenden Ansprüche,
**dadurch gekennzeichnet,**
**dass** die Rücklaufkupplung (21) einen Wärmemengenzähler (58) aufweist, der in eine an der Rücklaufkupplung (21) ausgebildete Aufnahme (59) eingebaut ist.

8. Gebäude nach einem der Ansprüche 4 bis 7,
**dadurch gekennzeichnet,**
**dass** zumindest eine Aufnahme (53, 57) der Vorlaufkupplung (20) und wenigstens eine Aufnahme (54, 55, 56, 59) der Rücklaufkupplung (21) gleich ausgestaltet sind, so dass zumindest zwei Elemente der Gruppe erstes Regelventil (26), Entlüftungsventil (29), das in die an der Vorlaufkupplung ausgebildete Aufnahme eingebaut ist, Sperrventil (30), zweites Regelventil (33), Spülanschluss (32), Entlüftungsventil (31) das in die an der Rücklaufkupplung ausgebildete Aufnahme eingebaut ist, und Wärmemengenzähler (58) gegeneinander austauschbar sind.

9. Gebäude nach einem der vorhergehenden Ansprüche
**dadurch gekennzeichnet,**
**dass** mehrere Heizkreise (4) an die gemeinsame Zulaufleitung (7) und die gemeinsame Rücklaufleitung (8) angeschlossen sind, wobei die Zulaufleitung (7) und die Rücklaufleitung (8) nach dem Tichelmann-System verlegt sind.

10. Gebäude nach einem der vorhergehenden Ansprüche,
**dadurch gekennzeichnet,**
**dass** eine Heizanlage (3) vorgesehen ist, die einen Wärmeerzeuger (15) zum Aufheizen des Wärmeträgermediums und eine Pumpe (16) zum Fördern des Wärmeträgermediums aufweist, wobei die Heizanlage (3) die Pumpe (16) für einen Sommerbetrieb auch bei ausgeschaltetem oder invers als Kälteerzeuger betriebenem Wärmeerzeuger (15) betreiben kann.

11. Gebäude nach Anspruch 10,
**dadurch gekennzeichnet,**
**dass** der Wärmeerzeuger (15) eine Wärmepumpe (60) aufweist, die einen Wärmepumpenkreis (61) aufweist, der einerseits mit dem Wärmeträgermedium und andererseits mit einer natürlichen Wärmequelle oder Wärmesenke wärmeübertragend gekoppelt ist.

## Claims

1. Building having at least one panel heater (1) for at least one room (18) in the building,
- wherein the respective panel heater (1) is equipped with multiple heating circuits (4), each of which has a flow line (5) and a return line (6),
- wherein the respective heating circuit (4) is connected via its flow line (5) to a supply line (7) to which multiple heating circuits (4) are connected, and is connected via its return line (6) to a discharge line (8) to which multiple heating circuits (4) are connected,
- wherein a separate connection box (17) is provided for each heating circuit (4), which box is mounted in the room (18) or room section to be heated by the heating circuit (4) and has a return coupling (21) in a box interior (19),
- wherein the connection box (17) has a housing (51) containing the box interior (19),
- wherein in the box interior (19) the return line (6) is connected to the return coupling (21) via a return connection (25) formed on the return coupling (21) and the discharge line (8) is connected to the return coupling (21) via a discharge connection (24) formed on the return coupling (21),
- wherein exactly four lines are connected to the respective connection box (17), namely the supply line (7), the discharge line (8), the flow line (5) and the return line (6),
- wherein a first control valve (26) is provided which is coupled to a thermostatic head (27) to control the temperature of the room (18) or room section to be heated, which thermostatic head is arranged on an outer side (28) of the connection box (17) exposed to the room (18) or room section to be heated,
**characterised in that**
- the connection box (17) also has a flow coupling (20) in the box interior (19),
- in the box interior (19), the supply line (7) is connected to the flow coupling (20) via a supply connection (22) formed on the flow coupling (20) and the flow line (5) is connected to the flow coupling (20) via a flow connection (23) formed on the flow coupling (20),
- the first control valve (26) is installed in a receptacle (53) formed on the flow coupling (20),
- a shut-off valve (30) is provided with which the fluidic connection between the return line (6) and the discharge line (8) can be shut off to deactivate the heating circuit (4),
- the shut-off valve (30) is installed in a receptacle (54) formed on the return coupling (21),
- the flow coupling (20) and the return coupling (21) are fastened separately to the housing (51) by means of fastening elements (52),
- the supply connection (22), the flow connection (23), the discharge connection (24) and the return connection (25) are parallel to each other and oriented vertically downwards,
- the flow line (5), the return line (6), the supply line (7) and the discharge line (8) run parallel to each other and vertically in a connection section (50) adjacent to the connection box (17).

2. Building according to claim 1,
**characterised in that**
the flow line (5), the return line (6), the supply line (7) and the discharge line (8) lie in a common plane in this connection section (50).

3. Building according to any of the preceding claims,
**characterised in that**
the supply coupling (20) has a vent valve (29) which is installed in a receptacle (57) formed on the supply coupling (20).

4. Building according to any of the preceding claims,
**characterised in that**
a second control valve (33) is provided which controls a heat transfer medium flow depending on the temperature of the heat transfer medium, wherein the second control valve (33) is installed in a receptacle (55) formed on the return coupling (21).

5. Building according to any of the preceding claims,
**characterised in that**
a flushing connection (32) is provided via which the heat transfer medium can be supplied to the heating circuit (4) or discharged therefrom, wherein the flushing connection (32) is installed in a receptacle (56) formed on the flow coupling (20) or on the return coupling (21).

6. Building according to any of the preceding claims,
**characterised in that**
the return coupling (21) has a vent valve (31) which is installed in a receptacle (54) formed on the return coupling (21).

7. Building according to any of the preceding claims,
**characterised in that**
the return coupling (21) has a heat meter (58) which is installed in a receptacle (59) formed on the return coupling (21).

8. Building according to any of claims 4 to 7,
**characterised in that**
at least one receptacle (53, 57) of the flow coupling (20) and at least one receptacle (54, 55, 56, 59) of the return coupling (21) are designed identically, such that at least two elements of the group consisting of the first control valve (26), vent valve (29) which is installed in the receptacle formed on the flow coupling, shut-off valve (30), second control valve (33), flushing connection (32), vent valve (31) which is installed in the receptacle formed on the return coupling, and heat meter (58), are interchangeable with each other.

9. Building according to any of the preceding claims,
**characterised in that**
multiple heating circuits (4) are connected to the common supply line (7) and the common return line (8), wherein the supply line (7) and the return line (8) are routed according to the Tichelmann system.

10. Building according to any of the preceding claims,
**characterised in that**
a heating system (3) is provided which has a heat generator (15) for heating the heat transfer medium and a pump (16) for conveying the heat transfer medium, wherein the heating system (3) can operate the pump (16) in a summer mode even when the heat generator (15) is switched off or is operated inversely as a cooling generator.

11. Building according to claim 10,
**characterised in that**
the heat generator (15) has a heat pump (60) which has a heat pump circuit (61) which is coupled in a heat-transferring manner firstly to the heat transfer medium and secondly to a natural heat source or heat sink.

## Revendications

1. Bâtiment avec au moins un dispositif de chauffage de surface (1) pour au moins un espace (18) du bâtiment,
- dans lequel le dispositif de chauffage de surface (1) respectif est équipé de plusieurs circuits de chauffage (4) qui présentent respectivement une canalisation montante (5) et une canalisation descendante (6),
- dans lequel le circuit de chauffage (4) respectif est raccordé par le biais de sa canalisation montante (5) à une conduite d'arrivée (7), à laquelle plusieurs circuits de chauffage (4) sont raccordés, et est raccordé par le biais de sa canalisation descendante (6) à une conduite de décharge (8), à laquelle sont raccordés plusieurs circuits de chauffage (4),
- dans lequel pour chaque circuit de chauffage (4), une propre boîte de raccordement (17) est prévue, laquelle est montée dans l'espace (18) ou la section d'espace à chauffer avec le circuit de chauffage (4) et qui présente dans un espace intérieur de boîte (19) un couplage descendant (21),
- dans lequel la boîte de raccordement (17) présente un boîtier (51) qui contient l'espace intérieur de boîte (19),
- dans lequel dans l'espace intérieur de boîte (19), la canalisation descendante (6) est raccordée par le biais d'un raccord descendant (25) réalisé au niveau du couplage descendant (21) et la conduite de décharge (8) est raccordée par le biais d'un raccord de décharge (24) réalisé au niveau du couplage descendant (21) au couplage descendant (21),
- dans lequel précisément quatre conduites sont raccordées à la boîte de raccordement (17) respective, à savoir la conduite d'arrivée (7), la conduite de décharge (8), la canalisation montante (5) et la canalisation descendante (6),
- dans lequel une première soupape de régulation (26) est prévue, laquelle est couplée pour la régulation de température de l'espace (18) ou de la section d'espace à chauffer à une tête de thermostat (27) qui est agencée au niveau d'un côté extérieur (28) exposé à l'espace (18) ou la section d'espace à chauffer de la boîte de raccordement (17),
**caractérisé en ce que**
- la boîte de raccordement (17) présente en outre dans l'espace intérieur de boîte (19) un couplage montant (20),
- dans l'espace intérieur de boîte (19), la conduite d'arrivée (7) est raccordée par le biais d'un raccord d'arrivée (22) réalisé au niveau du couplage montant (20) et la canalisation montante (5) est raccordée par le biais d'un raccord montant (23) réalisé au niveau du couplage montant (20) au couplage montant (20),
- la première soupape de régulation (26) est installée dans un logement (53) réalisé au niveau du couplage montant (20),
- une soupape de blocage (30) est prévue, avec laquelle la liaison fluidique entre la canalisation descendante (6) et la conduite de décharge (8) peut être bloquée pour la désactivation du circuit de chauffage (4),
- la soupape de blocage (30) est installée dans un logement (54) réalisé au niveau du couplage descendant (21),
- le couplage montant (20) et le couplage descendant (21) sont fixés séparément au boîtier (51) au moyen d'éléments de fixation (52),
- le raccord d'arrivée (22), le raccord montant (23), le raccord de décharge (24) et le raccord descendant (25) sont orientés parallèlement les uns aux autres et verticalement vers le bas,
- la canalisation montante (5), la canalisation descendante (6), la conduite d'arrivée (7) et la conduite de décharge (8) s'étendent dans une section de raccordement (50) contiguë à la boîte de raccordement (17) parallèlement les unes aux autres et verticalement.

2. Bâtiment selon la revendication 1,
**caractérisé en ce que**
la canalisation montante (5), la canalisation descendante (6), la conduite d'arrivée (7) et la conduite de décharge (8) se trouvent dans cette section de raccordement (50) dans un plan commun.

3. Bâtiment selon l'une quelconque des revendications précédentes,
**caractérisé en ce que**
le couplage montant (20) présente une soupape de ventilation (29) qui est installée dans un logement (57) réalisé au niveau du couplage montant (20).

4. Bâtiment selon l'une quelconque des revendications précédentes,
**caractérisé en ce que**
une seconde soupape de régulation (33) est prévue, laquelle commande un courant de milieu caloporteur dépendant de la température du milieu caloporteur, dans lequel la seconde soupape de régulation (33) est installée dans un logement (55) réalisé au niveau du couplage descendant (21).

5. Bâtiment selon l'une quelconque des revendications précédentes,
**caractérisé en ce que**
un raccord de rinçage (32) est prévu, par le biais duquel le milieu caloporteur peut être amené au circuit de chauffage (4) ou évacué de celui-ci, dans lequel le raccord de rinçage (32) est installé dans un logement (56) réalisé au niveau du couplage montant (20) ou au niveau du couplage descendant (21).

6. Bâtiment selon l'une quelconque des revendications précédentes,
**caractérisé en ce que**
le couplage descendant (21) présente une soupape de ventilation (31) qui est installée dans un logement (54) réalisé au niveau du couplage descendant (21).

7. Bâtiment selon l'une quelconque des revendications précédentes,
**caractérisé en ce que**
le couplage descendant (21) présente un compteur de chaleur (58) qui est installé dans un logement (59) réalisé au niveau du couplage descendant (21).

8. Bâtiment selon l'une quelconque des revendications 4 à 7,
**caractérisé en ce que**
au moins un logement (53, 57) du couplage montant (20) et au moins un logement (54, 55, 56, 59) du couplage descendant (21) sont configurés de manière identique de sorte qu'au moins deux éléments du groupe constitué de la première soupape de régulation (26), soupape de ventilation (29) qui est installée dans le logement réalisé au niveau du couplage montant, soupape de blocage (30), seconde soupape de régulation (33), raccord de rinçage (32), soupape de ventilation (31) qui est installée dans le logement réalisé au niveau du couplage descendant, et compteur de chaleur (58) soient interchangeables l'un par l'autre.

9. Bâtiment selon l'une quelconque des revendications précédentes,
**caractérisé en ce que**
plusieurs circuits de chauffage (4) sont raccordés à la conduite d'arrivée (7) commune et à la canalisation descendante (8) commune, dans lequel la conduite d'arrivée (7) et la canalisation descendante (8) sont posées selon le système de Tichelmann.

10. Bâtiment selon l'une quelconque des revendications précédentes,
**caractérisé en ce que**
une installation de chauffage (3) est prévue, laquelle présente un générateur de chaleur (15) pour le chauffage du milieu caloporteur et une pompe (16) pour le transport du milieu caloporteur, dans lequel l'installation de chauffage (3) peut faire fonctionner la pompe (16) pour un mode été aussi en cas de générateur de chaleur (15) éteint, ou en fonctionnement inverse comme générateur de froid.

11. Bâtiment selon la revendication 10,
**caractérisé en ce que**
le générateur de chaleur (15) présente une pompe à chaleur (60) qui présente un circuit de pompe à chaleur (61) qui est couplé d'un côté au milieu caloporteur et de l'autre côté à une source de chaleur naturelle ou à un puits de chaleur de manière à transmettre la chaleur.
